# EUROPEAN PATENT SPECIFICATION

(11) **EP 3 889 227 B1**
(45) Date of publication and mention of the grant of the patent: **16.11.2022**
(21) Application number: 20167377.9
(22) Date of filing: 31.03.2020
(51) Int. Cl.: C09D 11/16, C09D 11/17

(54) **PEELABLE INK COMPOSITION FOR POROUS SUBSTRATES**
ABZIEHBARE TINTENZUSAMMENSETZUNG FÜR PORÖSE SUBSTRATE
COMPOSITION D'ENCRE PELABLE POUR SUBSTRATS POREUX

(43) Date of publication of application: 06.10.2021
(73) Proprietor: Société BIC, 92110 Clichy (FR)
(72) Inventor: BETHOUART, Carine, 62152 NEUFCHATEL HARDELOT (FR)
(74) Representative: Cabinet Beau de Loménie

(56) References cited:
- EP-B1- 0 556 668
- JP-A- 2004 143 213
- JP-A- 2004 143 381

## Description

The present invention concerns an aqueous peelable ink composition, more specifically a writing ink composition, in particular for porous substrates. The invention also concerns a method for preparing such an aqueous peelable ink composition. A writing instrument comprising such an aqueous peelable ink composition and a method for writing on a porous substrate are also part of the invention. Finally, the invention concerns a porous substrate coated with an aqueous peelable ink composition according to the invention. The aqueous peelable ink composition of the invention includes a film-forming elastomeric polymer and one or more pigments dispersed in water. When the ink composition is applied to porous substrates, the water evaporates and the polymer provides a coalesced residue on the surface of the substrate. The ink composition is peelable in that the residue can be removed from the surface of the substrate, preferably paper surface, for some period of time after formation without leaving a visible residue or damaging the substrate. Hence, the initial color (first color) of the ink composition after writing on a substrate can be removed by peeling, and the written mark changes into a second color. Preferably, the first and second colors are different which means that they can be distinguished from each other by the human eye. The ink composition of the invention is particularly suitable for use with writing porous substrates (also named porous surfaces) made, basically, of pressed, matted fibers, like paper or cardboard. The aqueous peelable ink composition of the invention is also storage-stable, easy to manufacture, and easy to apply.

The ink composition of the invention preferably has a low viscosity, preferably a viscosity ranging from 3 to 10 mPa.s, more preferably ranging from 3 to 7 mPa.s, and as a result is particularly suitable for use with standard felt-tip markers that rely on a capillary feed system to draw ink from a reservoir. Thus, the ink composition of the invention is suitable for use in felt-pens, highlighters, markers, which typically use colored pigments. One significant advantage to using the ink composition of the invention in markers is that when textbook pages are highlighted, the highlighted portions can be erased later when the book is used by another reader.

Aqueous erasable writing ink compositions are known in the art such as in EP0556668B1 or JP03027484B2. Said aqueous ink compositions contain a film-forming elastomeric polymer and colorant. However, with this kind of erasable writing ink compositions, erasability may be difficult after a long period of time, and is thus sometimes not satisfactory. Furthermore, the peelability of the ink compositions of the prior art requires significantly high pressure to obtain a good color-changing. In addition, the colors obtained with the ink compositions of the prior art are generally not very vivid.

Therefore, there is a need to find a new aqueous erasable ink composition, more specifically a new erasable writing ink composition, enabling to obtain a good deposit which has, in particular, a satisfactory color intensity (vividness), a good peelability by mechanical action particularly when used on porous substrates, preferably while avoiding an unwanted color loss due to a change in temperature and/or an unwanted color return.

The inventors have surprisingly found that the use of hydrogenated acrylonitrile butadiene rubber as a specific film-forming elastomeric polymer, in combination with at least one pigment dispersed in water, can resolve the above-mentioned problem. The peelable ink composition of the invention also presents the advantage of being peelable with fingers, thus using less waste than with conventional erasers. Furthermore, the aqueous peelable ink composition of the invention also presents the advantage of enabling a change of color, in particular by applying a low pressure (by the user).

In addition, the aqueous peelable ink composition of the invention enables obtaining vivid colors of written marks once applied, especially on porous substrates.

An additional advantage of the invention is the possibility to obtain an aqueous peelable ink composition with color-changing having a good cap-off time. The term "cap-off" designated the ability of the ink composition of the invention with color-changing of not drying up in the writing instrument, which means in particular that the writing instrument can be left open for longer period of time, preferably one hour or even several hours, in particular with removed cap, without drying up.

Hereinafter, a detailed description of the present invention will be given. The specific embodiments are meant better illustrate the present invention, however, it should be understood that the present invention is not limited to these specific embodiments.

In the sense of the present invention, the expression "comprising a" should be understood as being synonymous with "comprising at least one".

In the sense of the present invention, the expressions "between ... and ..." or "ranging from ... to ..." should be understood as including the values of the limits.

For the purposes of the present invention, the term "peelable ink" is intended to mean any ink which can be peeled (or rubbed) after writing, preferably by the use of a finger or a friction body wherein the friction body can be an eraser or a tissue. The written mark obtained, in particular on cellulosic fibers paper such as paper (printer paper for example) and cardboard, by this ink can therefore be peeled just after writing such as less than 10 seconds after writing, even a few days after writing, and also even one month after writing.

Hence, once applied the written mark made with the ink composition according to the invention can be erased by peeling (or rubbing) or alternatively its initial color (first color) can be changed into another color (second color). Therefore, according to a first specific embodiment of the invention, the ink composition of the invention is erasable. According to a second specific embodiment of the invention, the ink composition of the invention is peelable from a first color into a second color, which is advantageously different from the first color. Advantageously, according to this second embodiment, the initial color, as well as the second color (after peeling), are vivid.

For the purposes of the present invention, the term "erasable" or "peelable" should be understood as any written mark which can be peeled and/or rubbed after writing, preferably by the use of a finger or a friction body wherein the friction body can be an eraser or a tissue.

For the purposes of the present invention, the term "porous substrate" is intended to mean substrate that contains pores. The porous substrates have empty spaces or pores that allow external matter, like ink, to penetrate into the substrate.

Advantageously, the roughness of the substrate can be defined by its air permeability and measured by the standard ISO 8791 (unit: mL.min⁻¹). In a preferred embodiment, the air permeability of the porous substrate of the invention ranges from 50 to 1,000 mL.min⁻¹, preferably from 60 to 400 mL.min⁻¹, and more preferably from 80 to 280 mL.min⁻¹.

In particular, the porous substrate is chosen among porous substrate comprising cellulosic fibers such as paper, printer paper, or cardboard.

The ink composition according to the present invention is advantageously irreversibly erased. It is therefore an irreversible peelable ink composition. According to a preferred embodiment, the ink composition is an irreversible peelable color-changing ink composition. The term "color-changing ink" is intended to mean that once the color has changed, it is not possible to change it again, and in particular it is not possible to go back to the initial color (first color).

The ink composition according to the present invention is more specifically a writing ink. For the purposes of the present invention, the term "writing ink" is intended to mean any ink which is intended to be used in a writing instrument, and in particular in a felt-pen, a highlighter, a marker. A writing ink should not be confused with a printing ink which is used in printing machines and which does not have the same technical constraints, and thus the same specifications. Indeed, a writing ink must not contain solid particles of which the size is greater than the channels of the writing instrument, in order to avoid blocking them, which would inevitably lead to writing being irreversibly stopped. It must also dry sufficiently rapidly to avoid smudging the writing medium. It must also avoid the problems of migration (bleeding) over time. Thus, the ink composition according to the present invention will be suitable for the writing instrument for which it is intended.

The present invention therefore concerns an aqueous peelable ink composition for porous substrates comprising:
(a) at least one film-forming elastomeric polymer,
(b) at least one pigment, and
(c) water,
wherein the film-forming elastomeric polymer (a) is hydrogenated acrylonitrile butadiene rubber (HNBR).

In the sense of the invention, "film-forming" means a polymer capable of forming, by itself a macroscopically continuous film on a substrate, in particular on a porous substrate, and preferably a cohesive film.

In the sense of the invention, "elastomeric" means a polymer that displays rubber-like elasticity, i.e. a deformable, flexible polymer which has viscoelastic properties.

In the sense of the invention, a "polymer" is a compound (in particular a large molecule or a macromolecule) corresponding to the repetition of one or more units (these units being derived from compounds called monomers), and in particular the repetition of at least two repeating units, and preferably at least ten repeating units.

The film-forming elastomeric polymer (a) allows the fixation of the ink composition of the invention on the paper, and therefore avoids the written mark (deposit) of the ink to be peeled (i.e. removed) by simply brushing it with another sheet of paper while being erasable or while being able to change its initial change color (first color) to another one (second color) (when a colorant is also present in the ink composition of the invention) by peeling with a friction body. The film-forming elastomeric polymer (a) of the invention is hydrogenated acrylonitrile butadiene rubber (HNBR), for example commercially available under the name Zetpol^{®} 2230LX (Zeon Corporation), Therban^{®} (Brenntag), as well as mixtures thereof.

Advantageously, the film-forming elastomeric polymer (a) represents at least 8% by weight, preferably at least 12% by weight, more preferably at least 16% by weight, and even more preferably at least 20% by weight, relative to the total weight of the ink composition. In a preferred embodiment, the content of film-forming elastomeric polymer (a) ranges from 8 to 36% by weight, and more preferably from 12 to 32% by weight, relative to the total weight of the ink composition.

The aqueous peelable ink composition of the present invention further comprises a pigment (b) which gives the color to the ink composition. The term "pigment" should be understood as meaning white or colored, mineral or organic particles of any form, which are insoluble in the medium in which they are solubilized, and which are intended to color the ink composition once applied on a porous substrate before peeling. The pigments (b) are also generally contained in a dispersion, where the grinding down or particle size reduction is accompanied by appropriate dispersants to achieve stable dispersions. The pigment (b) is preferably a pigment dispersion, more preferably chosen in the group consisting of pigment black 7 (such as Flexiverse III black 7 by SunChemical^{®}), pigment blue 15:3 (such as APE FRE BL 15:3 DISP by SunChemical^{®}), pigment red (such as Pigment red 210 by SunChemical^{®}), pigment green 7 (such as Sunsperse Eco green, Flexiverse FD Green, Flexiverse Green 7, Flexiverse HC GRN 7 by SunChemical^{®}), and mixtures thereof. In a preferred embodiment, the pigment (b) is chosen in the group consisting of pigment black 7 (such as Flexiverse III black 7 by SunChemical^{®}), pigment blue 15:3 (such as APE FRE BL 15:3 DISP by SunChemical^{®}), and mixtures thereof.

According to a preferred embodiment, the diameter of the pigment in a pigment dispersion is less than 1 µm, and preferably less than 0.7 µm.

Advantageously, the content of pigment dispersion (b) ranges from 0.1 to 10% by weight, and preferably from 0.5 to 7% by weight, relative to the total weight of the ink composition.

Advantageously, the content of pigment (d) ranges from 30 to 50% by weight, preferably from 35 to 45% by weight, and more preferably from 38 to 45%, relative to the total weight of the pigment dispersion.

The aqueous peelable ink composition of the invention may further comprise at least one dye, in particular a mixture of dyes, solubilized in water. According to this specific embodiment, the ink composition of the invention is color-changing, which means that a written mark made with the ink composition of the invention can change from a first color into a second color by mechanical action (i.e. by peeling the first color).

The term "dyes" should be understood as meaning colored, mineral or organic particles of any form, which are soluble in the medium in which they are solubilized, and which are intended to color the ink composition once applied on a porous substrate after peeling. The presence of a dye in the ink composition of the invention allows a change of the initial color of the writing in another color by peeling with a finger or a friction body. The dye may be chosen for example in the group consisting of direct dyes (for example C.I direct black 17, 19, 22, 32, 38, 51, 71; C.I direct yellow 4, 26, 44, 50; C.I direct red 1, 4, 23, 31, 37, 39, 75, 80, 81, 83, 225, 226, 227; C.I direct blue 1, 15, 41, 71, 86, 87, 106, 108, 199, and the like), acid dyes (for example C.I acid black 1, 2, 24, 26, 31, 52, 107, 109, 110, 119, 154; C.I acid yellow 1, 7, 17, 19, 23, 25, 29, 38, 42, 49, 61, 72, 78, 110, 127, 135, 141, 142; C.I acid red 8, 9, 14, 18, 26, 27, 33, 35, 37, 51, 52, 57, 82, 83, 87, 92, 94, 111, 129, 131, 138, 186, 249, 254, 265, 276; C.I acid violet 15, 17, 49; C.I acid blue 1, 3, 7, 9, 15, 22, 23, 25, 40, 41, 43, 62, 78, 83, 90, 93, 100, 103, 104, 112, 113, 158; C.I acid green 3, 9, 16, 25, 27; C.I acid orange 56, and the like), food dyes (such as C.I. food yellow 3, and the like), Malachite green (C.I 4200) Victoria blue FB (C.I. 44045) methyl violet FN (C.I. 42535), rhodamine F4G (C.I. 45160), and rhodamine 6GCP (C.I 45160), and mixtures thereof.

When present, the content of the dye(s) may range from 0.1 to 10% by weight, advantageously from 0.2 to 8% by weight, and more advantageously from 0.3 to 5% by weight, by weight relative to the total weight of the ink composition.

The aqueous peelable ink composition of the invention also contains water (c) as the solvent.

Advantageously, the content of water (c) in the aqueous peelable ink composition of the invention ranges from 10 to 80% by weight, more advantageously from 10 to 70% by weight, and even more advantageously from 20 to 60% by weight, relative to the total weight of the ink composition.

The aqueous peelable ink composition of the invention may also contain at least one release agent. The release agent of the invention is free of silicone, and is advantageously a polyoxyethylene sorbitan ester, more advantageously a polyoxyethylene sorbitan fatty acid ester, even more advantageously a polyoxyethylene sorbitan fatty acid ester with a chain of fatty acid in C₅-C₂₅, and even more advantageously a polyoxyethylene sorbitan fatty acid ester with a chain of fatty acid in C₈-C₁₆. In a particularly preferred embodiment, the release agent of the invention is a polyoxyethylene sorbitan monolaurate. The polyoxyethylene sorbitan ester comprises repeating units of ethylene oxide, preferably at least 20 repeating units of ethylene oxide. In a particularly preferred embodiment, the polyoxyethylene sorbitan monolaurate has a weight average molecular weight M_{w} ranging from 800 to 2,000 g.mol⁻¹, more advantageously from 1,000 to 1,500 g.mol⁻¹, and even more advantageously of 1,300 g.mol⁻¹, measured by Gel Permeation Chromatography (GPC).

Advantageously, the content of release agent in the aqueous peelable ink composition of the invention ranges from 0.1 to 5% by weight, more advantageously from 0.1 to 3% by weight, and even more advantageously from 0.2 to 3% by weight, relative to the total weight of the ink composition.

The aqueous peelable ink composition of the invention may further contain at least one plasticizer. The plasticizer of the invention is chosen in the group consisting of alcohols, preferably glycerin, benzoate esters, diisobutyrate esters such as trimethyl pentanyl diisobutyrate, and mixtures thereof, and more preferably glycerin, benzoate esters, and mixtures thereof. According to a preferred embodiment, the aqueous peelable ink composition of the invention comprises as plasticizer a mixture of at least one ester and at least one alcohol, wherein the at least one alcohol preferably has a boiling point higher than 160°C, and more preferably is glycerin (boiling point: 290°C).

Advantageously, the content of plasticizer in the aqueous peelable ink composition of the invention ranges from 1 to 25% by weight, and more advantageously from 8 to 20% by weight, relative to the total weight of the ink composition.

The aqueous peelable ink composition according to the present invention may further comprise additional additive(s) known by the skilled person to be usable in aqueous ink compositions, advantageously selected in the group consisting of antimicrobial agents, antifungal agents, dispersing agents, wetting agents, pH regulators, and mixtures thereof.

Advantageously, the content of additional additive(s) in the ink composition of the invention ranges from 0.1 to 30% by weight, more advantageously from 0.1 to 20% by weight, and even more advantageously from 0.1 to 10% by weight, relative to the total weight of the ink composition.

The aqueous peelable ink composition of the invention may advantageously contain at least one antimicrobial agent such as methyl paraben, phenoxyethanol, isothiazolinone, 1,2-benzoisothiazolin-3-one, 2-methyl-4-isothiazolin-3-one, and mixtures thereof.

Advantageously, the antimicrobial agent is present in the aqueous peelable ink composition of the invention in a content ranging from 0.1 to 5% by weight, and more advantageously from 0.1 to 2% by weight, relative to the total weight of the ink composition.

The aqueous peelable ink composition according to the present invention may also contain a pH regulator, preferably chosen in the group consisting of ammonia, urea, monoethanolamine, diethanolamine, triethanolamine, alkali metal salts of phosphoric acid such as tripolyphosphate, sodium carbonate and hydroxides of alkali metals such as sodium hydroxide.

The ink composition according to the present invention is peelable, advantageously by peeling such as by mechanical friction, in particular by the use of a finger or a friction body wherein the friction body is an eraser or a tissue. The ink composition of the invention is therefore peelable by the use of the heat generated by the friction of the finger or the eraser.

Advantageously, the eraser used as a friction body may be chosen in the group consisting of ethylene-propylene-diene monomer (EPDM) rubber, Vulcanized Thermoplastic Elastomer (TPV) which is a blend of ethylene-propylene-diene monomer (EPDM) rubber and polypropylene (PP), ethylene-propylene rubber (EPR), poly(styrene-butadiene-styrene) (SBS), styrene ethylene butylene styrene (SEBS), natural rubber (NR), polyisoprene (IR), polyvinyl chloride, styrene-based thermoplastic elastomers including styrene-butadiene-styrene (SBS), styrene-ethylene-butylene-styrene (SEBS), styrene-ethylene-propylene-styrene (SEPS), styrene-ethylene-ethylene-propylene-styrene (SEEPS), polyether based polyurethane (PTU), and mixtures thereof.

Advantageously, the tissue used as a friction body may be chosen in the group consisting of cotton fabric, synthetic fabric and leather fabric, and more advantageously cotton fabric.

The aqueous peelable ink composition according to the present invention has advantageously a viscosity of 3 to 10 mPa.s, and more advantageously of 3 to 7 mPa.s, measured at 20°C with a Shell Cup # 1 marketed by NORCROSS^{®} Corporation. When the viscosity is less than 3 mPa.s, the pigment particles may settle more rapidly in the composition with a risk of ink leakage. Furthermore, when the viscosity is higher than 10 mPa.s, the flow rate of the ink composition is too low and any line was not written.

The present invention also concerns a method for preparing an aqueous peelable ink composition according to the invention, comprising the steps of:
(i) under stirring, adding at least one film-forming elastomeric polymer (a), and the optional dye, to water (c),
(ii) under stirring, adding at least one pigment (b), and the optional at least one release agent and at least one plasticizer, to the mixture obtained in step (i), and
(iii) under stirring, adding the optional additives to the mixture obtained in step (ii).

The film-forming elastomeric polymer (a), pigment (b), water (c), as well as the optional release agent, dye, plasticizer and additive(s), are as defined above for the aqueous peelable ink composition according to the invention.

During steps (i), (ii) and (iii), the ink ingredients are mixed under stirring at room temperature (20°C), advantageously at a stirring speed ranging from 200 to 700 rpm, and more advantageously at a stirring speed of 500 rpm.

The ink composition obtained in steps (i), (ii) and (iii) can be homogenized during a certain period of time ranging from 3 to 20 minutes, and preferably from 5 to 10 minutes.

The present invention also concerns a writing instrument, in particular a pen such as a felt-pen, a highlighter, a marker, and more advantageously it is a writing felt-pen, a coloring felt-pen, a highlighter, containing an ink composition according to the invention.

Advantageously, the writing instrument according to the present invention contains an eraser, in particular located on the cap or on the non-writing end of the writing instrument. More particularly, the eraser consists of ethylene-propylene-diene monomer (EPDM) rubber, Vulcanized Thermoplastic Elastomer (TPV) which is a blend of ethylene-propylene-diene monomer (EPDM) rubber and polypropylene (PP), ethylene-propylene rubber (EPR), poly(styrene-butadiene-styrene) (SBS), styrene ethylene butylene styrene (SEBS), natural rubber (NR), polyisoprene (IR), polyvinyl chloride, styrene-based thermoplastic elastomers including styrene-butadiene-styrene (SBS), styrene-ethylene-butylene-styrene (SEBS), styrene-ethylene-propylene-styrene (SEPS), styrene-ethylene-ethylene-propylene-styrene (SEEPS), polyether based polyurethane (PTU), and mixtures thereof.

According to a preferred embodiment, the writing instrument according to the present invention comprises:
- an axial barrel containing an aqueous peelable ink composition according to the invention, and
- a pen body which delivers the aqueous peelable ink composition stored in the axial barrel.

Another object of the present invention is a method for writing on a porous substrate, comprising the step of applying an ink composition according to the invention to a porous substrate, preferably comprising cellulose fibers, and more preferably chosen in the group consisting of paper, printer paper or cardboard. The method for writing on a porous substrate may further comprise the step of erasing by peeling the writing, preferably by peeling the writing with a finger or with a friction body wherein the friction body is an eraser or a tissue, said first and second colors being different from each other, in order to erase the writing (if absence of dye in the ink composition) or to change the initial color (first color) of the writing into another color (second color) (if presence of dye in the ink composition).

Finally, the present invention concerns a porous substrate coated with an aqueous peelable ink composition according to the present invention, wherein the substrate is preferably chosen in the group consisting of paper, printer paper, or cardboard.

In addition to the foregoing, the invention also comprises other provisions which will emerge from the additional description which follows, which relates to the preparation of aqueous peelable ink compositions according to the present invention and comparative examples.

### Examples:

### Example 1: preparation of a grey aqueous peelable ink composition according to the invention

An aqueous peelable ink composition according to the present invention comprising the ink ingredients of Table 1 was prepared.

**Table 1:**

| **Trade name** | **Chemical name** | **Function** | **% by weight** |
|---|---|---|---|
| Water | | Solvent | **33%** |
| Zetpol^{®} 2230LX | HNBR (dry extract: 40.5%) | Film-forming resin | 55% (22% of pure HNBR) |
| Benzoflex^{™} 2088 | Benzoate ester | Plasticizer | 10% |
| PAT^{®}-662/BNF | Polyoxyethylene sorbitan monolaurate | Release agent | 0.50% |
| Acticide PHE | Phenoxyethanol | Biocide | 0.50% |
| Flexiverse III Black 7 - LGD 2000 | Pigment dispersion | Black pigment dispersion | 1% |
| **Total** | | | **100%** |

For a preparation of 1 kg, 330 g of water were introduced at room temperature in a dissolver DISPERMAT^{®} LC75 (dissolver disc Ø 60 mm), under agitation (stirring speed: 500 rpm). Then, 550 g of Zetpol^{®} 2230LX (Zeon Corporation) were added at the same stirring speed. The % of solid HNBR in Zetpol^{®} 2230LX (Zeon Corporation) represents 40.5% (dry extract), and the % of solid HNBR in the final ink composition is thus of 22% by weight. After 5 minutes, 100 g of Benzoflex^{™} 2088 (EASTMAN) were slowly introduced. After 5 minutes under the same stirring speed, 5 g of PAT^{®}-662/BNF (Würtz) were added. After 5 minutes under the same stirring speed, 50 g of a black pigmented dispersion Flexiverse III Black 7 - LGD 2000 (SunChemical^{®}) were added. The mixture was stirred for 5 minutes more. Then, 5 g of Acticide PHE were added, and the mixture was stirred for 5 minutes more to obtain the final ink composition.

The viscosity of the aqueous peelable ink composition was measured at 20°C with a Shell Cup # 1 marketed by NORCROSS^{®} Corporation, according to the following procedure:
1. Dip the Shell Cup in the ink composition until the cup is completely filled with ink composition.
2. Take the Shell Cup out of the fluid and start the timer simultaneously.
3. Stop the timer as soon as the fluid does not flow out any more. The time displayed on timer is reported as the Shell Cup viscosity at 20°C of the fluid.
4. Clean and dry the Shell Cup.
5. Repeat steps 1 to 5 with the same fluid two times.
6. Report the average viscosity of the three measures.
7. Store the Shell Cup at 20°C.

The viscosity of the aqueous peelable ink composition of example 1 measured according to this procedure was: 5.3 mPa.s.

### Example 2: preparation of a grey aqueous peelable ink composition according to the invention (without release agent)

An aqueous peelable ink composition according to the present invention comprising the ink ingredients of Table 2 was prepared.

**Table 2:**

| **Trade name** | **Chemical name** | **Function** | **% by weight** |
|---|---|---|---|
| Water | | Solvent | 33.5% |
| Zetpol^{®} 2230LX | HNBR (dry extract: 40.5%) | Film-forming resin | 55% (22% of pure HNBR) |
| Benzoflex^{™} 2088 | Benzoate ester | Plasticizer | 10% |
| Acticide PHE | Phenoxyethanol | Biocide | 0.5% |
| Flexiverse III Black 7 - LGD 2000 | Pigment dispersion | Black pigment dispersion | 1% |
| **Total** | | | **100%** |

For a preparation of 1 kg, 335 g of water were introduced at room temperature in a dissolver DISPERMAT^{®} LC75 (dissolver disc Ø 60 mm), under agitation (stirring speed: 500 rpm). Then, 550 g of Zetpol^{®} 2230LX (Zeon Corporation) were added at the same stirring speed. The % of solid HNBR in Zetpol^{®} 2230LX (Zeon Corporation) represents 40.5% (dry extract), and the % of solid HNBR in the final ink composition is thus of 22% by weight. After 5 minutes, 100 g of Benzoflex^{™} 2088 (EASTMAN) were slowly introduced. After 5 minutes under the same stirring speed, 10 g of a black pigmented dispersion Flexiverse III Black 7 - LGD 2000 (SunChemical^{®}) were added. The mixture was stirred for 5 minutes more. Then, 5 g of Acticide PHE were added, and the mixture was stirred for 5 minutes more to obtain the final ink composition.

The viscosity of the aqueous peelable ink composition was measured at 20°C with a Shell Cup # 1 marketed by NORCROSS^{®} Corporation, according to the same procedure as described in example 1.

The viscosity of the aqueous peelable ink composition of example 2 measured according to this procedure was: 4.7 mPa.s.

### Example 3: preparation of a comparative aqueous peelable ink composition (with NBR instead of HNBR)

A comparative aqueous peelable ink composition comprising the ink ingredients of Table 3 was prepared.

**Table 3:**

| **Trade name** | **Chemical name** | **Function** | **% by weight** |
|---|---|---|---|
| Water | | Solvent | 55% |
| Nipol^{®} LX 531B | NBR (dry extract: 66%) | Film-forming resin | 33% (22% of pure NBR) |
| Benzoflex^{™} 2088 | Benzoate ester | Plasticizer | 10% |
| PAT^{®}-662/BNF | Polyoxyethylene sorbitan monolaurate | Release agent | 0.50% |
| Acticide PHE | Phenoxyethanol | Biocide | 0.50% |
| Flexiverse III Black 7 - LGD 2000 | Pigment dispersion | Black pigment dispersion | 1% |
| **Total** | | | **100%** |

For a preparation of 1 kg, 550 g of water were introduced at room temperature in a dissolver DISPERMAT^{®} LC75 (dissolver disc Ø 60 mm), under agitation (stirring speed: 500 rpm). Then, 330 g of Nippol^{®} LX 531B (Zeon Corporation) were added at the same stirring speed. The % of solid NBR in Nipol^{®} LX 531B (Zeon Corporation) represents 66% (dry extract), and the % of solid NBR in the final ink composition is thus of 22% by weight. After 5 minutes, 100 g of Benzoflex^{™} 2088 (EASTMAN) were slowly introduced. After 5 minutes, under the same stirring speed, 5 g of PAT^{®}-662/BNF were slowly added. After 5 minutes under the same stirring speed, 10 g of a black pigmented dispersion Flexiverse III Black 7 - LGD 2000 (SunChemical^{®}) were added. The mixture was stirred for 5 minutes more. Then, 5 g of Acticide PHE were added, and the mixture was stirred for 5 minutes more to obtain the final ink composition.

The viscosity of the aqueous peelable ink composition was measured at 20°C with a Shell Cup # 1 marketed by NORCROSS^{®} Corporation, according to the same procedure as described in example 1.

The viscosity of the aqueous peelable ink composition of example 3 measured according to this procedure was: 3.2 mPa.s.

### Example 4: erasability (peelability) performances of the prepared aqueous peelable ink compositions

### Erasabilityperformance: Measurement of peelability

The peelability (erasing efficiency) is the ability of the eraser to peel correctly the written mark applied on a porous substrate (calligraph notebook: Calligraphe LIGNE 7000, 70g.m⁻², 210 x 297 mm, 80 pages, by Clairefontaine), assessed according to the following method at 23°C and 50% relative humidity.

The written mark was peeled (or rubbed) with an eraser, i.e. polyether based polyurethane (PTU), just after writing (around 10 seconds after writing), to peel the color of the written mark.

The method is as follows:
Loops were drawn with a pen on the porous substrate, and then peeled in one time back and forth.

The scoring (i.e. the peeling efficiency) is defined as follows:
10: Erasability by peeling of the written mark is very efficient (no remaining written marks).
0: Erasability of the written mark 1 is not efficient (remaining written marks).

The results are indicated in Table 4 below.

### Easiness of the erasability (peelability): Measurement of pressure

The requested pressure to erase (or to peel) by rubbing the written mark applied on a porous substrate (calligraph notebook: Calligraphe LIGNE 7000, 70g.m⁻², 210 x 297 mm, 80 pages, by Clairefontaine) was assessed by using the following method at 23°C and 50% relative humidity.

The written mark was rubbed (or peeled) with an eraser, i.e. polyether based polyurethane (PTU), just after writing (around 10 seconds after writing), to erase the written mark.

The method is as follows:
A line of loops was rubbed, from one side to the other with diagonal movements, by increasing progressively the erasing pressure.

The pressure required was assessed in order to get a satisfactory erasing.

The scoring (easiness of the erasing by peeling of the written mark) is defined as follows:
10: Light pressure is requested to erase by peeling the written mark.
0: Strong pressure is requested to erase by peeling the written mark.

The results are indicated in Table 4 below.

**Table 4: comparison of the erasability (peelability) performances of the ink compositions of the invention (examples 1 and 2) with the comparative ink composition (example 3)**

| Ink compositions | Erasing efficiency of the written mark | Pressure (easiness of the erasing of the written mark) |
|---|---|---|
| Example 1 (invention) | 8.5 | 8.5 |
| Example 2 (invention) | 7.5 | 8 |
| Example 3 (comparative example) | 6.5 | 7.5 |

As shown in Table 4, the written mark of the ink compositions according to the invention (examples 1 and 2) exhibit good results in terms of erasing efficiency (peelability) of the written mark and in terms of easiness of erasing by peeling (low pressure needed).

Comparatively, the written mark obtained with the comparative ink composition of example 3 cannot be peeled correctly, as shown by the low erasing efficiency value. There are more remaining marks on the porous substrate than with the ink compositions of examples 1 and 2. It is observed that the intensity (darkness) of the black written mark obtained with the ink compositions of examples 1 and 2 was good.

When compared to the written mark obtained with the ink compositions of examples 1 and 2, the written mark obtained with the comparative ink composition of example 3 requires more pressure to erase by peeling the written mark.

### Example 5: preparation of a color-changing aqueous peelable ink composition according to the invention

An aqueous peelable ink composition according to the present invention comprising the ink ingredients of Table 5 was prepared.

**Table 5:**

| **Trade name** | **Chemical name** | **Function** | **% by weight** |
|---|---|---|---|
| Water | | Solvent | 28.5% |
| Zetpol^{®} 2230LX | HNBR (dry extract: 40.5%) | Film-forming resin | 55% (22% of pure HNBR) |
| Benzoflex^{™} 2088 | Benzoate ester | Plasticizer | 10% |
| PAT^{®}-662/BNF | Polyoxyethylene sorbitan monolaurate | Release agent | 0.5% |
| APE FRE BL 15:3 Disp BPD 0015 | Pigment dispersion | Pigment | 5% |
| Sanolin^{®} Rhodamine B02 | Acid Red 52 | Dye | 0.5% |
| Acticide PHE | Phenoxyethanol | Biocide | 0.5% |
| **Total** | | | **100%** |

For a preparation of 1 kg, 285 g of water were introduced at room temperature in a dissolver DISPERMAT^{®} LC75 (dissolver disc Ø 60 mm), and 5 g of Sanolin^{®} Rhodamine B02 (Clariant) were added under agitation (stirring speed: 500 rpm). Then, 550 g of Zetpol^{®} 2230LX (Zeon Corporation) were added at the same stirring speed. The % of solid HNBR in Zetpol^{®} 2230LX (Zeon Corporation) represents 40.5% (dry extract), and the % of solid HNBR in the final ink composition is thus of 22% by weight. After 5 minutes, 100 g of Benzoflex^{™} 2088 (EASTMAN) were slowly introduced. After 5 minutes under the same stirring speed, 5 g of PAT^{®}-662/BNF (Würtz) were added. After 5 minutes under the same stirring speed, 50 g of a blue pigmented dispersion APE FRE BL 15:3 Disp BPD 0015 (SunChemical^{®}) were added. The mixture was stirred for 5 minutes more. Then, 5 g of Acticide PHE were added, and the mixture was stirred for 5 minutes more to obtain the final ink composition.

The viscosity of the aqueous peelable ink composition was measured at 20°C with a Shell Cup # 1 marketed by NORCROSS^{®} Corporation, according to the same procedure as described in example 1.

The viscosity of the aqueous peelable ink composition of example 5 measured according to this procedure was: 6 mPa.s.

When writing with the ink composition of example 5, the color of the written mark made on the porous substrate is blue (color 1: blue). The written mark was then peeled with an eraser, i.e. polyether based polyurethane (PTU), just after writing (around 10 seconds after writing), to change the initial blue color of the writing mark into a second color (here color 2: pink).

It is observed that color 1 and color 2 are both intense (vivid), and color 1 was easily (low pressure required) and efficiently (good erasing efficiency) peeled.

## Claims

1. An ink composition comprising:
(a) at least one film-forming elastomeric polymer,
(b) at least one pigment, and
(c) water,
wherein the film-forming elastomeric polymer (a) is hydrogenated acrylonitrile butadiene rubber (HNBR).

2. An ink composition according to claim 1, wherein the composition further comprises at least one release agent.

3. An ink composition according to claim 2, wherein the release agent is a polyoxyethylene sorbitan ester, preferably a polyoxyethylene sorbitan fatty acid ester, more preferably a polyoxyethylene sorbitan fatty acid ester with a chain of fatty acid in C₅-C₂₅, even more preferably a polyoxyethylene sorbitan fatty acid ester with a chain of fatty acid in C₈-C₁₆, and even more preferably a polyoxyethylene sorbitan monolaurate.

4. An ink composition according to any one of claims 1 to 3, wherein the pigment (b) is a pigment dispersion, preferably chosen in the group consisting of pigment black 7, pigment blue 15:3, pigment red, pigment green 7, and mixtures thereof, and more preferably chosen in the group consisting of pigment black 7, pigment blue 15:3, and mixtures thereof.

5. An ink composition according to any one of claims 1 to 4, wherein the composition further comprises at least one dye.

6. An ink composition according to any one of claims 1 to 5, wherein the composition further comprises at least one plasticizer.

7. An ink composition according to claim 6, wherein the plasticizer is chosen in the group consisting of alcohols, preferably glycerin, benzoate esters, diisobutyrate esters such as trimethyl pentanyl diisobutyrate, and mixtures thereof, and more preferably in a content ranging from 1 to 25% by weight, relative to the total weight of the ink composition.

8. An ink composition according to any one of claims 1 to 7, wherein the content of film-forming elastomeric polymer (a) represents at least 8% by weight, preferably at least 12% by weight, more preferably at least 16% by weight, and even more preferably at least 20% by weight, relative to the total weight of the ink composition.

9. An ink composition according to claim 8, wherein the content of film-forming elastomeric polymer (a) ranges from 8 to 36% by weight, and preferably from 12 to 32% by weight, relative to the total weight of the ink composition.

10. An ink composition according to any one of claims 1 to 9, wherein the content of pigment dispersion (b) ranges from 0.1 to 10% by weight, and preferably from 0.5 to 7% by weight, relative to the total weight of the ink composition.

11. An ink composition according to any one of claims 1 to 10, wherein the content of water (c) ranges from 10 to 80% by weight, preferably from 10 to 70% by weight, and more preferably from 20 to 60% by weight, relative to the total weight of the ink composition.

12. An ink composition according to any one of claims 1 to 11, wherein the content of release agent ranges from 0.1 to 5% by weight, preferably from 0.1 to 3% by weight, and more preferably from 0.2 to 3% by weight, relative to the total weight of the ink composition.

13. An ink composition according to any one of claims 1 to 12, wherein the composition further comprises at least one additive selected from the group consisting of antimicrobial agents, antifungal agents, dispersing agents, wetting agents, pH regulators, and mixtures thereof.

14. An ink composition according to claim 13, wherein the composition comprises at least one antimicrobial agent preferably selected from the group consisting of methyl paraben, isothiazolinone, phenoxyethanol, 1,2-benzoisothiazolin-3-one, 2-methyl-4-isothiazolin-3-one, and mixtures thereof, and more preferably in a content ranging from 0.1 to 5% by weight, relative to the total weight of the ink composition.

15. An ink composition according to any one of claims 1 to 14, the ink composition having a viscosity of 3 to 10 mPa.s, and preferably of 4 to 7 mPa.s.

16. An ink composition according to any one of claims 1 to 15, wherein the ink composition is peelable, preferably by peeling with a finger or with a friction body wherein the friction body is an eraser or a tissue, and more preferably by the use of an eraser chosen in the group consisting of ethylene-propylene-diene monomer (EPDM) rubber, Vulcanized Thermoplastic Elastomer (TPV) which is a blend of ethylene-propylene-diene monomer (EPDM) rubber and polypropylene (PP), ethylene-propylene rubber (EPR), poly(styrene-butadiene-styrene) (SBS), styrene ethylene butylene styrene (SEBS), natural rubber (NR), polyisoprene (IR), polyvinyl chloride, styrene-based thermoplastic elastomers including styrene-butadiene-styrene (SBS), styrene-ethylene-butylene-styrene (SEBS), styrene-ethylene-propylene-styrene (SEPS), styrene-ethylene-ethylene-propylene-styrene (SEEPS), polyether based polyurethane (PTU), and mixtures thereof.

17. A method for preparing an aqueous peelable ink composition according to any one of claims 1 to 16, comprising the steps of:
(i) under stirring, adding at least one film-forming elastomeric polymer (a), and the optional dye, to water (c),
(ii) under stirring, adding at least one pigment (b), and the optional at least one release agent and at least one plasticizer, to the mixture obtained in step (i), and
(iii) under stirring, adding the optional additives to the mixture obtained in step (ii).

18. A writing instrument containing an ink composition according to any one of claims 1 to 16, wherein the writing instrument is a pen advantageously chosen in the group consisting of a felt-pen, a highlighter, a marker, and more advantageously a writing felt-pen, a coloring felt-pen, a highlighter.

19. A writing instrument according to claim 18, wherein the writing instrument comprises an eraser, advantageously located on the cap or on the non-writing end of the writing instrument.

20. A method for writing on a porous substrate, comprising the step of applying an ink composition according to any one of claims 1 to 16 to a porous substrate, preferably chosen in the group consisting of paper, printer paper, or cardboard.

21. A method according to claim 20, further comprising the step of erasing by peeling the writing, preferably by peeling with a finger or with a friction body wherein the friction body is an eraser or a tissue, to erase the writing or to change the initial color (first color) of the writing into another color (second color).

22. A porous substrate coated with an ink composition according to any one of claims 1 to 16, wherein the substrate is preferably chosen in the group consisting of paper, printer paper, or cardboard.

## Patentansprüche

1. Tintenzusammensetzung, umfassend:
(a) mindestens ein filmbildendes elastomerisches Polymer,
(b) mindestens ein Pigment und
(c) Wasser,
wobei das filmbildende elastomerische Polymer (a) hydrierter Acrylnitril-Butadien-Kautschuk (hydrogenated acrylonitrile butadiene rubber - HNBR) ist.

2. Tintenzusammensetzung nach Anspruch 1, wobei die Zusammensetzung ferner mindestens ein Trennmittel umfasst.

3. Tintenzusammensetzung nach Anspruch 2, wobei das Trennmittel ein Polyoxyethylensorbitanester, vorzugsweise ein Polyoxyethylensorbitanfettsäureester, mehr bevorzugt ein Polyoxyethylensorbitanfettsäureester mit einer Fettsäurekette in C₅-C₂₅, noch mehr bevorzugt ein Polyoxyethylensorbitanfettsäureester mit einer Fettsäurekette in C₈-C₁₆ und noch mehr bevorzugt ein Polyoxyethylensorbitanmonolaurat ist.

4. Tintenzusammensetzung nach einem der Ansprüche 1 bis 3, wobei das Pigment (b) eine Pigmentdispersion ist, die vorzugsweise in der Gruppe ausgesucht ist, bestehend aus Pigment Schwarz 7, Pigment Blau 15:3, Pigment Rot, Pigment Grün 7 und Mischungen davon, und mehr bevorzugt in der Gruppe ausgesucht ist, bestehend aus Pigment Schwarz 7, Pigment Blau 15:3 und Mischungen davon.

5. Tintenzusammensetzung nach einem der Ansprüche 1 bis 4, wobei die Zusammensetzung ferner mindestens einen Farbstoff umfasst.

6. Tintenzusammensetzung nach einem der Ansprüche 1 bis 5, wobei die Zusammensetzung ferner mindestens einen Weichmacher umfasst.

7. Tintenzusammensetzung nach Anspruch 6, wobei der Weichmacher in der Gruppe ausgesucht ist, bestehend aus Alkoholen, vorzugsweise Glycerin, Benzoatestern, Diisobutyratestern wie etwa Trimethylpentanyldiisobutyrat und Mischungen davon, und mehr bevorzugt in einem Gehalt reichend von 1 bis 25 Gew.-%, relativ zu dem Gesamtgewicht der Tintenzusammensetzung.

8. Tintenzusammensetzung nach einem der Ansprüche 1 bis 7, wobei der Gehalt an filmbildendem elastomerischem Polymer (a) mindestens 8 Gew.-%, vorzugsweise mindestens 12 Gew.-%, mehr bevorzugt mindestens 16 Gew.-% und noch mehr bevorzugt mindestens 20 Gew.-%, relativ zu dem Gesamtgewicht der Tintenzusammensetzung, darstellt.

9. Tintenzusammensetzung nach Anspruch 8, wobei der Gehalt an filmbildendem elastomerischem Polymer (a) von 8 bis 36 Gew.-% und vorzugsweise von 12 bis 32 Gew.-%, relativ zu dem Gesamtgewicht der Tintenzusammensetzung, reicht.

10. Tintenzusammensetzung nach einem der Ansprüche 1 bis 9, wobei der Gehalt an Pigmentdispersion (b) von 0,1 bis 10 Gew.-% und vorzugsweise von 0,5 bis 7 Gew.-%, relativ zu dem Gesamtgewicht der Tintenzusammensetzung, reicht.

11. Tintenzusammensetzung nach einem der Ansprüche 1 bis 10, wobei der Gehalt an Wasser (c) von 10 bis 80 Gew.-%, vorzugsweise von 10 bis 70 Gew.-% und mehr bevorzugt von 20 bis 60 Gew.-%, relativ zu dem Gesamtgewicht der Tintenzusammensetzung, reicht.

12. Tintenzusammensetzung nach einem der Ansprüche 1 bis 11, wobei der Gehalt an Trennmittel von 0,1 bis 5 Gew.-%, vorzugsweise von 0,1 bis 3 Gew.-% und mehr bevorzugt von 0,2 bis 3 Gew.-%, relativ zu dem Gesamtgewicht der Tintenzusammensetzung, reicht.

13. Tintenzusammensetzung nach einem der Ansprüche 1 bis 12, wobei die Zusammensetzung ferner mindestens einen Zusatzstoff, der aus der Gruppe ausgewählt ist, bestehend aus antimikrobiellen Mitteln, Antimykotika, Dispergiermitteln, Benetzungsmitteln, pH-Regulatoren und Mischungen davon, umfasst.

14. Tintenzusammensetzung nach Anspruch 13, wobei die Zusammensetzung mindestens ein antimikrobielles Mittel, das vorzugsweise aus der Gruppe ausgewählt ist, bestehend aus Methylparaben, Isothiazolinon, Phenoxyethanol, 1,2-Benzoisothiazolin-3-on, 2-Methyl-4-isothiazolin-3-on und Mischungen davon, und mehr bevorzugt in einem Gehalt reichend von 0,1 bis 5 Gew.-%, relativ zu dem Gesamtgewicht der Tintenzusammensetzung, umfasst.

15. Tintenzusammensetzung nach einem der Ansprüche 1 bis 14, wobei die Tintenzusammensetzung eine Viskosität von 3 bis 10 mPa.s und vorzugsweise von 4 bis 7 mPa.s aufweist.

16. Tintenzusammensetzung nach einem der Ansprüche 1 bis 15, wobei die Tintenzusammensetzung abziehbar ist, vorzugsweise durch Abziehen mit einem Finger oder mit einem Reibungskörper, wobei der Reibungskörper ein Radierer oder ein Gewebe ist, und mehr bevorzugt durch die Verwendung eines Radierers, der in der Gruppe ausgesucht ist, bestehend aus Ethylen-Propylen-Dien-Monomer(EPDM)-Kautschuk, vulkanisiertem thermoplastischem Elastomer (TPV), das ein Blend aus Ethylen-Propylen-Dien-Monomer(EPDM)-Kautschuk und Polypropylen (PP) ist, Ethylen-Propylen-Kautschuk (ethylene-propylene rubber - EPR), Poly(Styrol-Butadien-Styrol) (SBS), Styrol-Ethylen-Butylen-Styrol (SEBS), Naturkautschuk (natural rubber - NR), Polyisopren (IR), Polyvinylchlorid, auf Styrol basierende thermoplastische Elastomere einschließlich Styrol-Butadien-Styrol (SBS), Styrol-Ethylen-Butylen-Styrol (SEBS), Styrol-Ethylen-Propylen-Styrol (SEPS), Styrol-Ethylen-Ethylen-Propylen-Styrol (SEEPS), auf Polyether basierendes Polyurethan (PTU), und Mischungen davon.

17. Verfahren zum Erstellen einer wässrigen abziehbaren Tintenzusammensetzung nach einem der Ansprüche 1 bis 16, umfassend die Schritte:
(i) unter Rühren, Zusetzen mindestens eines filmbildenden elastomerischen Polymers (a), und des optionalen Farbstoffs, zu Wasser (c),
(ii) unter Rühren, Zusetzen mindestens eines Pigments (b), und des optionalen mindestens einen Trennmittels und mindestens einen Weichmachers, zu der in Schritt (i) erhaltenen Mischung und,
(iii) unter Rühren, Zusetzen der optionalen Zusatzstoffe zu der in Schritt (ii) erhaltenen Mischung.

18. Schreibgerät, enthaltend eine Tintenzusammensetzung nach einem der Ansprüche 1 bis 16, wobei das Schreibgerät ein Stift ist, der vorteilhaft in der Gruppe, bestehend aus einem Filzstift, einem Textmarker, einem Markierer und noch vorteilhafter einem Schreibfilzstift, einem Farbfilzstift, einem Textmarker, ausgesucht ist.

19. Schreibgerät nach Anspruch 18, wobei das Schreibgerät einen Radierer umfasst, der an der Kappe oder an dem nicht schreibenden Ende des Schreibgeräts vorteilhaft gelegen ist.

20. Verfahren zum Schreiben auf einem porösen Substrat, umfassend den Schritt eines Aufbringens einer Tintenzusammensetzung nach einem der Ansprüche 1 bis 16 auf ein poröses Substrat, das vorzugsweise in der Gruppe ausgesucht ist, bestehend aus Papier, Druckerpapier oder Pappe.

21. Verfahren nach Anspruch 20, ferner umfassend den Schritt eines Radierens durch Abziehen der Schrift, vorzugsweise durch Abziehen mit einem Finger oder mit einem Reibungskörper, wobei der Reibungskörper ein Radierer oder ein Gewebe ist, um die Schrift zu radieren oder um die Anfangsfarbe (erste Farbe) der Schrift in eine andere Farbe (zweite Farbe) zu ändern.

22. Poröses Substrat, beschichtet mit einer Tintenzusammensetzung nach einem der Ansprüche 1 bis 16, wobei das Substrat vorzugsweise in der Gruppe ausgesucht ist, bestehend aus Papier, Druckerpapier oder Pappe.

## Revendications

1. Composition d'encre comprenant :
(a) au moins un polymère élastomère filmogène,
(b) au moins un pigment, et
(c) de l'eau,
le polymère élastomère filmogène (a) étant un caoutchouc acrylonitrile butadiène hydrogéné (HNBR).

2. Composition d'encre selon la revendication 1, dans laquelle la composition comprend en outre au moins un agent antiadhérent.

3. Composition d'encre selon la revendication 2, dans laquelle l'agent antiadhérent est un ester de polyoxyéthylène sorbitan, de préférence un ester d'acide gras de polyoxyéthylène sorbitan, plus préférablement un ester d'acide gras de polyoxyéthylène sorbitan à chaîne d'acide gras en C₅-C₂₅, encore plus préférablement un ester d'acide gras de polyoxyéthylène sorbitan à chaîne d'acide gras en C₈-C₁₆ et encore plus préférablement un monolaurate de polyoxyéthylène sorbitan.

4. Composition d'encre selon l'une quelconque des revendications 1 à 3, dans laquelle le pigment (b) est une dispersion pigmentaire, de préférence choisie dans le groupe constitué de pigment noir 7, de pigment bleu 15:3, de pigment rouge, de pigment vert 7 et de mélanges de celui-ci, et plus préférablement choisie dans le groupe constitué de pigment noir 7, de pigment bleu 15:3 et de leurs mélanges.

5. Composition d'encre selon l'une quelconque des revendications 1 à 4, dans laquelle la composition comprend en outre au moins un colorant.

6. Composition d'encre selon l'une quelconque des revendications 1 à 5, dans laquelle la composition comprend en outre au moins un plastifiant.

7. Composition d'encre selon la revendication 6, dans laquelle le plastifiant est choisi dans le groupe constitué d'alcools, de préférence de glycérine, d'esters de benzoate, d'esters de diisobutyrate comme le diisobutyrate de triméthyl pentanyle et de leurs mélanges, et plus préférablement d'une teneur allant de 1 à 25 % en poids, par rapport au poids total de la composition d'encre.

8. Composition d'encre selon l'une quelconque des revendications 1 à 7, dans laquelle la teneur en polymère élastomère filmogène (a) représente au moins 8 % en poids, de préférence au moins 12 % en poids, plus préférablement au moins 16 % en poids et encore plus préférablement au moins 20 % en poids, par rapport au poids total de la composition d'encre.

9. Composition d'encre selon la revendication 8, dans laquelle la teneur en polymère élastomère filmogène (a) est dans la plage de 8 à 36 % en poids, et de préférence de 12 à 32 % en poids, par rapport au poids total de la composition d'encre.

10. Composition d'encre selon l'une quelconque des revendications 1 à 9, dans laquelle la teneur en dispersion de pigment (b) est dans la plage de 0,1 à 10 % en poids, et de préférence de 0,5 à 7 % en poids, par rapport au poids total de la composition d'encre.

11. Composition d'encre selon l'une quelconque des revendications 1 à 10, dans laquelle la teneur en eau (c) est dans la plage de 10 à 80 % en poids, de préférence de 10 à 70 % en poids, et plus préférablement de 20 à 60 % en poids, par rapport au poids total de la composition d'encre.

12. Composition d'encre selon l'une quelconque des revendications 1 à 11, dans laquelle la teneur en agent antiadhérent est dans la plage de 0,1 et 5 % en poids, de préférence entre 0,1 et 3 % en poids, et plus préférablement entre 0,2 et 3 % en poids, par rapport à le poids total de la composition d'encre.

13. Composition d'encre selon l'une quelconque des revendications 1 à 12, dans laquelle la composition comprend en outre au moins un additif choisi dans le groupe constitué d'agents antimicrobiens, d'agents antifongiques, d'agents dispersants, d'agents mouillants, de régulateurs de pH et de leurs mélanges.

14. Composition d'encre selon la revendication 13, dans laquelle la composition comprend au moins un agent antimicrobien de préférence choisi dans le groupe constitué de méthylparaben, d'isothiazolinone, de phénoxyéthanol, de 1,2-benzoisothiazolin-3-one, de 2-méthyl-4-isothiazolin-3-one et de leurs mélanges, et plus préférablement d'une teneur dans la plage de 0,1 à 5 % en poids, par rapport au poids total de la composition d'encre.

15. Composition d'encre selon l'une quelconque des revendications 1 à 14, la composition d'encre ayant une viscosité de 3 à 10 mPa.s, et de préférence de 4 à 7 mPa.s.

16. Composition d'encre selon l'une quelconque des revendications 1 à 15, dans laquelle la composition d'encre est pelable, de préférence par pelage avec un doigt ou avec un corps de friction, le corps de friction est une gomme ou un tissu, et plus préférablement par l'utilisation d'une gomme choisie dans le groupe constitué de caoutchouc de terpolymère d'éthylène-propylène-diène (EPDM), d'élastomère thermoplastique vulcanisé (TPV) qui est un mélange de caoutchouc de terpolymère d'éthylène-propylène-diène (EPDM) et de polypropylène (PP), de caoutchouc éthylène-propylène (EPR), de poly(styrène-butadiène-styrène) (SBS), de styrène éthylène butylène styrène (SEBS), de caoutchouc naturel (NR), de polyisoprène (IR), de polychlorure de vinyle, d'élastomères thermoplastiques à base de styrène dont styrène-butadiène-styrène (SBS), de styrène-éthylène-butylène-styrène (SEBS), de styrène-éthylène-propylène-styrène (SEPS), de styrène-éthylène-éthylène-propylène-styrène (SEEPS), de polyuréthane à base de polyéther (PTU) et de leurs mélanges.

17. Procédé de préparation d'une composition d'encre aqueuse pelable selon l'une quelconque des revendications 1 à 16, comprenant les étapes suivantes :
(i) l'ajout sous agitation à l'eau (c) au moins d'un polymère élastomère filmogène (a) et de colorant éventuel,
(ii) sous agitation, l'ajout d'au moins un pigment (b) et des éventuels au moins un agent de démoulage et au moins un plastifiant, au mélange obtenu à l'étape (i), et
(iii) sous agitation, l'ajout des éventuels additifs au mélange obtenu à l'étape (ii).

18. Instrument d'écriture contenant une composition d'encre selon l'une quelconque des revendications 1 à 16, dans lequel l'instrument d'écriture est un stylo avantageusement choisi dans le groupe constitué d'un feutre, d'un surligneur, d'un marqueur et plus avantageusement d'un feutre d'écriture, d'un feutre de coloriage, d'un surligneur.

19. Instrument d'écriture selon la revendication 18, dans lequel l'instrument d'écriture comprend une gomme, avantageusement située sur le capuchon ou sur l'extrémité non inscriptible de l'instrument d'écriture.

20. Procédé d'écriture sur un substrat poreux, comprenant l'étape d'application d'une composition d'encre selon l'une quelconque des revendications 1 à 16 sur un substrat poreux, de préférence choisi dans le groupe constitué de papier, de papier d'imprimante ou de carton.

21. Procédé selon la revendication 20, comprenant en outre l'étape d'effacement par pelage de l'écriture, de préférence par pelage avec un doigt ou avec un corps de friction, le corps de friction étant une gomme ou un tissu, pour effacer l'écriture ou changer la couleur initiale (première couleur) de l'écriture dans une autre couleur (seconde couleur).

22. Substrat poreux revêtu d'une composition d'encre selon l'une quelconque des revendications 1 à 16, dans lequel le substrat est de préférence choisi dans le groupe constitué de papier, de papier d'imprimante ou de carton.
